# FASCICULE DE BREVET EUROPEEN

(11) **EP 2 255 414 B1**
(45) Date de publication et mention de la délivrance du brevet: **12.08.2015**
(21) Numéro de dépôt: 09735612.5
(22) Date de dépôt: 25.03.2009
(51) Int. Cl.: H02G 3/04, H01R 13/56, H02G 15/007

(54) **DISPOSITIF DE PROTECTION, NOTAMMENT POUR UN ÉLÉMENT DE CONNEXION**
SCHUTZVORRICHTUNG, INSBESONDERE FÜR EIN VERBINDUNGSELEMENT
PROTECTIVE DEVICE, PARTICULARLY FOR CONNECTION ELEMENT

(30) Priorité: 27.03.2008 FR 0801700
(43) Date de publication de la demande: 01.12.2010
(73) Titulaire: Federal Mogul Systems Protection, 60800 Crépy-en-Valois (FR)
(72) Inventeur: CHESNAIS, Jean-René, F-60800 Crepy en Valois (FR); BATIQUE, Yann, F-60800 Crepy en Valois (FR); FERRAND, Jean, F-60800 Crepy en Valois (FR)
(74) Mandataire: Santarelli
(86) Numéro de dépôt international: PCT/FR2009/000326
(87) Numéro de publication internationale: WO 2009/130403

(56) Documents cités:
- EP-A- 0 553 618
- GB-A- 1 223 671
- US-A- 3 290 064
- US-A1- 2007 191 755

## Description

La présente invention concerne un dispositif de protection thermique et mécanique.

Elle concerne notamment la protection d'un câble de connexion utilisé dans les véhicules automobiles pour le raccordement d'un capteur monté sur un moteur de véhicule automobile à un faisceau de câbles.

Dans ce type d'applications, il est nécessaire de protéger le câble de connexion non seulement vis-à-vis des agressions mécaniques, mais également vis-à-vis des dégagements de chaleur importants générés dans l'environnement du moteur.

En particulier, la présence du tube d'évacuation des gaz d'échappement (tube EGR) entraîne un rayonnement très important de chaleur qui peut conduire à la fonte d'un câble de connexion ou provoquer des courts-circuits.

On connaît ainsi dans le document US 2007/0191755, un dispositif de protection d'un câble de connexion comportant une gaine de protection mécanique et un embout de protection thermique monté à une extrémité de la gaine de protection mécanique.

Dans ce document, la gaine de protection mécanique est une gaine convolutée en plastique. L'embout de protection thermique est réalisé à partir d'une couche de matériau isolante et d'une couche réfléchissante.

Un dispositif de positionnement et de fixation permet de monter de manière détachable l'embout de protection thermique à une extrémité de la gaine de protection mécanique.

La présente invention a pour but de proposer un dispositif de protection thermique et mécanique simple à mettre en oeuvre et facilitant notamment le montage de l'élément protégé par ce dispositif de protection.

A cet effet, la présente invention concerne, selon un premier aspect, un dispositif de protection comprenant une gaine de protection mécanique et un embout de protection thermique monté à une extrémité de ladite gaine de protection mécanique.

Selon l'invention, la gaine de protection mécanique est constituée d'une structure textile tubulaire déformable par compression dans la direction longitudinale de ladite gaine de protection mécanique, ladite structure textile présentant, dans une zone de compression longitudinale, une portion de gaine expansée adaptée à coopérer par retournement avec une extrémité dudit embout de protection thermique.

Grâce à la structure textile déformable par compression de la gaine de protection mécanique, il est possible de raccourcir la longueur du dispositif de protection, afin de laisser apparente une extrémité d'un élément à raccorder protégé par le dispositif de protection. On obtient en outre le retournement de la portion de gaine expansée à proximité de l'embout de protection thermique. Le retournement de la gaine de protection mécanique au niveau de la portion de gaine expansée permet de créer un pli à l'intérieur de la gaine de protection mécanique. Ce pli de la gaine est maintenu en forme par l'embout de protection thermique. La position de coopération de l'embout de protection thermique et de la portion de gaine expansée retournée permet de s'affranchir de la présence du dispositif de protection pour réaliser sans gêne le montage de l'élément à raccorder.

Par ailleurs, cette position de coopération étant obtenue par une simple compression longitudinale de la gaine de protection mécanique, il est possible de réaliser cette opération plusieurs fois sur le dispositif de protection, notamment en cas de réintervention après une première monte.

Selon un mode de réalisation pratique de l'invention, la gaine de protection mécanique est déformable entre une position d'équilibre instable dans laquelle ladite portion de gaine expansée est retournée et maintenue par une extrémité de l'embout de protection thermique et une position de repos dans laquelle ladite gaine de protection mécanique s'étend dans le prolongement dudit embout de protection thermique, la gaine de protection mécanique étant mobile de ladite position d'équilibre instable à ladite position de repos par rappel élastique de ladite gaine de protection dans la position de repos.

Grâce à la force de rappel élastique existant entre la position d'équilibre instable et la position de repos de la gaine de protection mécanique, il est possible, après montage, d'obtenir un positionnement automatique du dispositif de protection, et notamment un positionnement sûr, et indépendant de l'opérateur, de l'embout de protection thermique à l'extrémité de la gaine de protection mécanique.

Selon un mode de réalisation avantageux de l'invention, la portion de gaine expansée est maintenue par retournement sur une surface extérieure dudit embout de protection thermique.

Ainsi, la gaine de protection mécanique peut être maintenue dans une zone de compression longitudinale par simple retournement sur l'embout de protection thermique, créant ainsi une position d'équilibre instable suffisamment fiable pour être conservée alors que l'opérateur manipule l'élément à raccorder protégé par le dispositif de protection.

De préférence, la gaine de protection mécanique est constituée d'une tresse tubulaire de monofilaments.

Grâce à cette structure tressée de la gaine de protection mécanique, celle-ci facilite l'évacuation des calories au niveau du dispositif de protection et permet notamment d'éviter le confinement de la chaleur au niveau de l'embout de protection thermique.

Par ailleurs, la structure tressée permet d'obtenir une structure textile tubulaire pouvant s'expanser en largeur sous l'effet d'une compression longitudinale.

Selon un second aspect, la présente invention vise également l'utilisation d'un dispositif de protection conforme à l'invention pour recouvrir un élément de connexion, et notamment un élément de connexion d'un capteur monté sur un moteur d'un véhicule automobile.

Enfin, la présente invention vise à protéger, selon un troisième aspect, l'utilisation du dispositif de protection conforme à l'invention, pour recouvrir un élément de connexion lors du montage dudit élément de connexion à un élément de raccordement, comprenant les étapes suivantes :
- compression longitudinale de la gaine de protection mécanique pour obtenir une portion de gaine expansée autour dudit élément de connexion ;
- retournement de ladite portion de gaine expansée par appui contre une extrémité de l'embout de protection thermique ;
- montage dudit élément de connexion à l'élément de raccordement ; et
- déblocage de ladite portion de gaine expansée retournée par rappel élastique de ladite gaine de protection mécanique dans une position de repos.

Cette utilisation du dispositif de protection présente des caractéristiques et avantages analogues à ceux décrits précédemment en relation avec le dispositif de protection mis en oeuvre.

D'autres particularités et avantages de l'invention apparaîtront encore dans la description ci-après.

Aux dessins annexés, donnés à titre d'exemples non limitatifs :
- la figure 1 est une vue en coupe longitudinale d'un dispositif de protection selon un premier mode de réalisation de l'invention, monté sur un élément de connexion ;
- la figure 2 est une vue analogue à la figure 1 illustrant la compression dans la direction longitudinale du dispositif de protection ;
- la figure 3 est une vue analogue à la figure 1 illustrant le dispositif de protection dans une position d'équilibre instable ;
- la figure 4 est une vue en perspective d'un dispositif de protection selon un second mode de réalisation de l'invention, monté sur un élément de connexion ;
- la figure 5 est une vue analogue à la figure 4, illustrant le dispositif de protection dans une position d'équilibre instable ; et
- la figure 6 est une vue en coupe longitudinale illustrant le dispositif de protection dans la position d'équilibre instable de la figure 5.

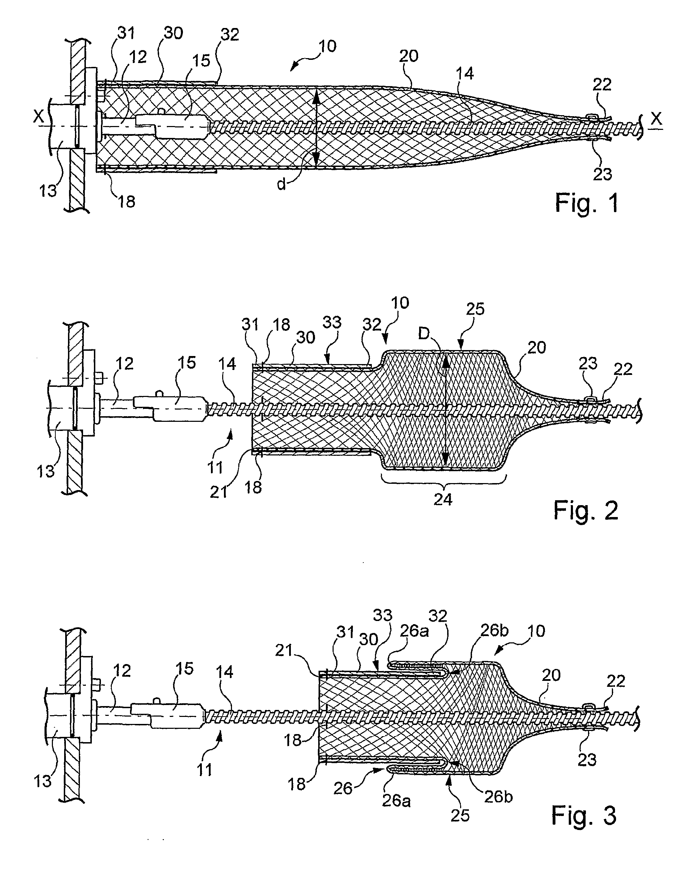

On va décrire à présent en référence aux figures 1 à 3, un premier mode de réalisation du dispositif de protection conforme à l'invention.

Le dispositif de protection est illustré ici dans une application à un véhicule automobile.

À titre d'exemple non limitatif, le dispositif de protection 10 est monté sur un élément de connexion 11 d'un capteur 12 monté sur un moteur 13.

Le capteur 12 peut être par exemple un capteur PMH ou capteur Position Moteur Haute, permettant de détecter la position d'un cylindre moteur. Le capteur 12 peut également être un capteur d'oxygène pour contrôler le fonctionnement du moteur 13.

Plus particulièrement, le dispositif de protection 10 s'étend dans une direction longitudinale X pour protéger un câble de connexion 14 raccordé à un connecteur 15 proprement dit, destiné à être monté sur le capteur 12.

Ces éléments à protéger sont bien connus de l'état de la technique et n'ont pas besoin d'être décrits plus avant ici.

Le dispositif de protection 10 comporte une gaine de protection mécanique 20 et un embout de protection thermique 30 monté à une extrémité 21 de la gaine de protection mécanique 20.

La gaine de protection mécanique 20 s'étend ainsi d'une première extrémité 21 à une seconde extrémité 22 sur la longueur totale du dispositif de protection tel qu'illustré à la figure 1 en position de repos.

Comme bien illustré sur la figure 1, cette gaine de protection mécanique 20 s'étend ainsi pour recouvrir non seulement l'élément de connexion 11, mais également une partie de la connexion du capteur 12 au niveau de la première extrémité 21.

A sa seconde extrémité 22, la gaine de protection mécanique 20 peut être solidarisée au câble de connexion 14 au moyen d'un collier de serrage 23 de réalisation usuelle.

Ce montage à la seconde extrémité 22 de la gaine de protection mécanique 20 permet ainsi de solidariser l'élément de connexion 11 et le dispositif de protection 10 avant son montage dans le moteur.

Dans ce mode de réalisation, la gaine de protection mécanique 20 est constituée d'une structure textile tubulaire réalisée à partir d'une tresse de monofilaments. Ici, il s'agit d'une gaine tubulaire fermée obtenue directement par tressage tubulaire.

Les monofilaments utilisés pour réaliser la gaine tressée sont en plastique à haut module d'élasticité.

A titre d'exemple, ces monofilaments peuvent être constitués de polyester ou de polyamide. Bien entendu, d'autres matériaux présentant des caractéristiques techniques améliorées peuvent être utilisés, notamment lorsque le dispositif de protection 10 doit être utilisé dans des environnements à fort rayonnement thermique.

La longueur et le diamètre de la structure textile tubulaire sont liés à l'application, et notamment aux dimensions de l'élément de connexion 11 à protéger.

Cette structure textile tubulaire tressée présente la particularité d'être déformable par compression dans la direction longitudinale X de la gaine de protection mécanique 20 et de former, comme bien illustré à la figure 2, dans la zone de compression longitudinale 24, une portion de gaine expansée 25.

Les dimensions de cette portion de gaine expansée 25, et notamment son diamètre, sont dépendants en particulier de l'angle de tressage des monofilaments de la structure textile, ainsi que du nombre de mèches utilisées pour réaliser la structure tressée.

À titre d'exemple non limitatif, la portion de gaine expansée 25 peut présenter un diamètre D sensiblement égal à deux fois le diamètre d de la gaine de protection mécanique 20 en position de repos.

Bien que dans ce mode de réalisation la gaine de protection mécanique présente une structure tubulaire, une forme différente pourrait être utilisée, et notamment une structure évasée à l'une de ses extrémités.

L'embout de protection thermique 30 peut être réalisé à partir d'un écran thermique formé pour recouvrir une portion de la gaine de protection mécanique 20 à proximité de la première extrémité 21.

À titre d'exemple non limitatif, l'embout de protection thermique peut être réalisé par enroulement sous forme sensiblement cylindrique d'un écran thermique et solidarisation, par exemple par soudure au collage, des bords longitudinaux.

Cet écran thermique peut être réalisé à partir d'un textile revêtu d'une couche d'aluminium. À titre d'exemple, on peut utiliser une feuille de polyester aluminisé.

Bien entendu, la structure de l'écran thermique n'est pas limitative. Plus généralement, il peut être constitué de fibres plastiques ou de fibres inorganiques, et notamment de fibres de verre, tissées ou non tissées, revêtues d'une couche d'aluminium.

De même, la forme cylindrique illustrée sur les figures 1 à 3 n'est pas limitative, l'embout de protection thermique pouvant également avoir une forme de cône évasé en direction du capteur 12, afin de s'adapter aux différentes applications à protéger.

L'embout de protection thermique 30 s'étend ainsi selon la direction longitudinale X sur une portion du dispositif de protection 10 afin de protéger notamment la partie de connexion (partie de connexion du capteur 12, connecteur 15) vis-à-vis des agressions thermiques du milieu environnant.

Dans l'application décrite ici, les capteurs moteur sont souvent soumis à un fort rayonnement de la part des collecteurs ou tubes EGR. Ainsi, l'embout de protection thermique 30 doit permettre de protéger la connexion vis-à-vis d'une température environnante pouvant atteindre 150° C, afin d'éviter tout endommagement du connecteur ou court-circuit.

A titre d'exemple non limitatif, la longueur de l'embout de protection thermique 30 selon la direction longitudinale X peut être comprise en 2 et 10 cm, et par exemple entre 3 et 6 cm.

La longueur totale du dispositif de protection peut présenter une longueur comprise entre 15 et 20 cm.

Le montage de l'embout de protection thermique 30 sur l'extrémité 21 de la gaine de protection mécanique 20 est réalisé de préférence au niveau d'une première extrémité 31 de l'embout de protection thermique.

Les moyens de fixation utilisés peuvent être par exemple une ou plusieurs agrafes 18 permettant de solidariser les extrémités 21, 31 de la gaine de protection mécanique 20 et de l'embout de protection thermique 30.

Bien entendu, tout autre mode de fixation, et notamment par collage ou soudure, pourrait être utilisé ici.

En revanche, la gaine de protection mécanique 20 s'étend librement à l'intérieur de l'embout de protection thermique 30 et débouche de l'embout de protection thermique 30, en se prolongeant au-delà de la seconde extrémité 32 de l'embout de protection thermique 30.

Dans ce mode de réalisation, comme illustré à la figure 1, le diamètre d de la gaine de protection mécanique 20 correspond sensiblement au diamètre intérieur de l'embout de protection thermique 30. Bien entendu, le diamètre d de la gaine de protection mécanique 20 pourrait être plus petit, l'extrémité 21 de la gaine de protection mécanique 20 étant alors légèrement déformée en forme de cône pour permettre la fixation des extrémités 21, 31 de la gaine de protection mécanique 20 et de l'embout de protection thermique 30.

On notera que la structure respirante de la gaine de protection mécanique constituée d'une tresse, permet de faciliter la circulation de l'air et notamment l'évacuation de la chaleur au niveau de l'embout de protection thermique 30 vers l'extrémité opposée 22 de la gaine de protection mécanique 20.

Comme bien illustré sur les figures 2 et 3, lors de la compression longitudinale de la gaine de protection mécanique 20, la portion de gaine expansée 25 permet d'initier le retournement de la gaine de protection mécanique 20 dans cette zone, en coopérant avec l'extrémité 32 de l'embout de protection thermique 30.

Ici, le diamètre D de la portion de gaine expansée 25 est supérieur aux dimensions externes de l'embout de protection thermique 30, et ici à son diamètre.

Ainsi, dans ce mode de réalisation, la portion de gaine expansée 25 est maintenue par retournement comme illustré à la figure 3 sur une surface extérieure 33 de l'embout de protection thermique 30.

Plus particulièrement, la portion de gaine expansée 25 forme un pli 26 en forme de couronne annulaire rentrant dans l'intérieur de la gaine de protection mécanique 20. Le pli 26 s'étend dans ce mode de réalisation sur une partie correspondante de la surface 33 à proximité de l'extrémité 32 de l'embout de protection thermique 30.

Le pli 26 est ainsi formé d'une portion de gaine rentrée à l'intérieur de la portion de gaine expansée 25, s'étendant entre une extrémité externe 26a de la portion de gaine expansée 25 et une extrémité interne 26b raccordée à la portion de la gaine de protection mécanique 20 s'étendant à l'intérieur de l'embout de protection thermique 30.

Lors du passage de la gaine de protection mécanique 20 dans la position illustrée à la figure 3, la seconde extrémité 32 de l'embout de protection thermique 30 constitue une zone d'appui pour le retournement de la portion de gaine expansée 25 sur la seconde extrémité 32 de l'embout de protection thermique 30.

Grâce à la structure élastique de la tresse, le pli 26 de la portion de gaine expansée retournée 25 maintient l'extrémité 32 de l'embout de protection thermique 30 pincée entre le pli 26 et la portion de gaine de protection mécanique 20 s'étendant à l'intérieur de l'embout de protection thermique 30.

On notera que la force exercée par la portion de gaine expansée retournée peut éventuellement provoquer une légère déformation et un resserrement de l'extrémité 32 de l'embout de protection thermique 30.

On obtient ainsi une position d'équilibre instable dans lequel la gaine de protection mécanique 20 présente une longueur plus courte selon la direction longitudinale X et est maintenue grâce à la portion de gaine expansée et retournée sur l'embout de protection thermique 30. Comme bien illustré à la figure 3, cette longueur raccourcie du dispositif de protection 10 permet de laisser libre l'extrémité de l'élément de connexion 11 et de faciliter ainsi les interventions au niveau du capteur 12 et du connecteur 15.

La gaine de protection mécanique 20 est par ailleurs mobile de cette position d'équilibre instable à la position de repos illustrée à la figure 1, par la force de rappel élastique exercée par la structure textile elle-même.

Ainsi, dès que la portion de gaine expansée 25 est légèrement déplacée de sa position d'équilibre instable, la gaine de protection mécanique 20 a tendance à retourner à sa position de repos illustrée à la figure 1.

Cet effet de rappel en position de repos (également appelé en anglais *« push back effect* ») permet d'obtenir comme illustré à la figure 1 un positionnement fiable de l'embout de protection thermique 30 au dessus des éléments à protéger de la chaleur, c'est-à-dire ici le capteur 12 et le connecteur 15.

Ainsi, le montage du dispositif de protection est facilité et la localisation précise de l'embout de protection thermique 30 ne dépend pas des manipulations de l'opérateur.

En pratique, le dispositif de protection décrit précédemment peut être utilisé en première monte d'un capteur 12 et de son élément de connexion 11 sur un moteur 13 d'un véhicule automobile.

Afin de réaliser ce montage, la gaine de protection mécanique 20 est comprimée longitudinalement afin d'obtenir une portion de gaine expansée 25 autour de l'élément de connexion 11.

La portion de gaine expansée 25 est alors retournée par appui contre l'extrémité 32 de l'embout de protection thermique 30, afin d'être maintenue dans la position d'équilibre instable illustré à la figure 3.

Dans cette position raccourcie du dispositif de protection 10, il est possible de monter librement le connecteur 15 sur un élément de raccordement, et ici le capteur 12.

Une fois les manipulations réalisées au niveau de la connexion, la portion de gaine expansée retournée 25 peut être débloquée de telle sorte que la gaine de protection mécanique 20 revient, sous l'effet de la force de rappel élastique, dans la position de repos illustrée à la figure 1. Ainsi, le dispositif de protection 10 reprend sa longueur initiale et l'embout de protection thermique 30 vient occuper automatiquement une position dédiée au dessus du connecteur 15 afin de protéger cette partie sensible de l'élément de connexion 11 vis-à-vis des agressions thermiques.

Bien entendu, la présente invention n'est pas limitée à l'exemple de réalisation décrit précédemment.

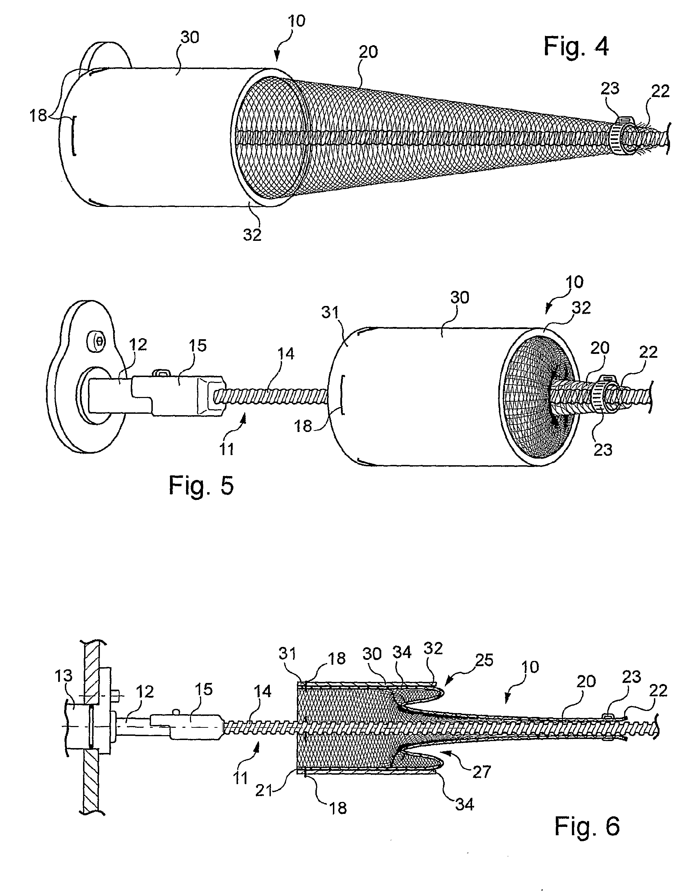

En particulier, on a illustré aux figures 4 à 6, un mode de réalisation différent dans lequel la portion de gaine expansée 25 est également adaptée à coopérer par retournement avec une extrémité 32 de l'embout de protection thermique, mais à l'intérieur de cet embout de protection thermique.

Les éléments communs au mode de réalisation précédent présentent les mêmes références numériques et n'ont pas besoin d'être décrits de nouveau de façon détaillée.

Comme bien illustré aux figures 5 et 6, la portion de gaine expansée 25 est adaptée à former ici un pli 27 à l'intérieur de l'embout de protection thermique 30. Ainsi, dans ce second mode de réalisation, la gaine de protection mécanique 20 est maintenue dans une position d'équilibre instable par maintien en compression du pli 27 par une surface intérieure 34 de l'embout de protection thermique 30, à proximité de sa seconde extrémité 32.

Par ailleurs, la structure textile de la gaine de protection mécanique pourrait être différente, et en particulier être réalisée par tricotage tubulaire.

## Revendications

1. Dispositif de protection comprenant une gaine de protection mécanique (20) et un embout de protection thermique (30) monté à une extrémité (21) de ladite gaine de protection mécanique (20), **caractérisé en ce que** la gaine de protection mécanique (20) est constituée d'une structure textile tubulaire déformable par compression dans la direction longitudinale (X) de ladite gaine de protection mécanique (20), ladite structure textile présentant, dans une zone de compression longitudinale (24), une portion de gaine expansée (25) adaptée à coopérer par retournement avec une extrémité (32) dudit embout de protection thermique (30).

2. Dispositif de protection conforme à la revendication 1, **caractérisé en ce que** ladite gaine de protection mécanique (20) est déformable entre une position d'équilibre instable dans laquelle ladite portion de gaine expansée (25) est retournée et maintenue par une extrémité (32) de l'embout de protection thermique (30) et une position de repos dans laquelle ladite gaine de protection mécanique (20) s'étend dans le prolongement dudit embout de protection thermique (30), la gaine de protection mécanique (20) étant mobile de ladite position d'équilibre instable à ladite position de repos par rappel élastique de ladite gaine de protection mécanique (20) dans ladite position de repos.

3. Dispositif de protection conforme à l'une des revendications 1 ou 2, **caractérisé en ce que** ladite portion de gaine expansée (25) est maintenue par retournement sur une surface extérieure (33) dudit embout de protection thermique (30).

4. Dispositif de protection conforme à la revendication 3, **caractérisé en ce que** le diamètre (D) de ladite portion de gaine expansée (25) est supérieur aux dimensions externes dudit embout de protection thermique (30).

5. Dispositif de protection conforme à l'une des revendications 1 à 4, **caractérisé en ce que** ladite gaine de protection mécanique (20) est constituée d'une tresse tubulaire de monofilaments.

6. Dispositif de protection conforme à l'une des revendications 1 à 5, **caractérisé en ce que** l'embout de protection thermique (30) a une forme sensiblement cylindrique, la gaine de protection mécanique (20) s'étendant à l'intérieur dudit embout de protection thermique (30), les extrémités (21, 31) de ladite gaine de protection mécanique (20) et dudit embout de protection thermique (30) étant fixées l'une à l'autre.

7. Dispositif de protection conforme à la revendication 6, **caractérisé en ce que** ledit embout de protection thermique (30) présente une seconde extrémité (32) opposée à une première extrémité (31) fixée à ladite gaine de protection mécanique (20), ladite seconde extrémité (32) constituant une zone d'appui pour le retournement de ladite portion de gaine expansée (25) sur ladite seconde extrémité (32) dudit embout de protection thermique (30).

8. Utilisation d'un dispositif de protection conforme à l'une des revendications 1 à 7, pour recouvrir un élément de connexion (11), et notamment un élément de connexion (11) d'un capteur (12) monté sur un moteur (13) d'un véhicule automobile.

9. Utilisation du dispositif de protection conforme à l'une des revendications 1 à 7, pour recouvrir un élément de connexion (11) lors du montage dudit élément de connexion (11) à un élément de raccordement (12), **caractérisée en ce qu'**elle comprend les étapes suivantes :
- compression longitudinale de la gaine de protection mécanique (20) pour obtenir une portion de gaine expansée (25) autour dudit élément de connexion (11) ;
- retournement de ladite portion de gaine expansée (25) par appui contre une extrémité (32) dudit embout de protection thermique (30) ;
- montage dudit élément de connexion (11) à l'élément de raccordement (12) ; et
- déblocage de ladite portion de gaine expansée retournée (25) par rappel élastique de ladite gaine de protection mécanique (20) dans une position de repos.

## Patentansprüche

1. Schutzvorrichtung mit einer Hülle (20) zum mechanischen Schutz und einem Ansatz (30) zum thermischen Schutz, der an einem Ende (21) der Hülle (20) zum mechanischen Schutz angebracht ist, **dadurch gekennzeichnet, dass** die Hülle (20) zum mechanischen Schutz aus einer röhrenförmigen textilen Struktur besteht, die durch Kompression in der Längsrichtung (X) der Hülle (20) zum mechanischen Schutz verformbar ist, wobei die textile Struktur in einer Längskompressionszone (24) einen expandierten Hüllenabschnitt (25) aufweist, der dazu angepasst ist, durch Zurückschieben mit einem Ende (32) des Ansatzes (30) zum thermischen Schutz zusammenzuwirken.

2. Schutzvorrichtung nach Anspruch 1, **dadurch gekennzeichnet, dass** die Hülle (20) zum mechanischen Schutz zwischen einer Position instabilen Gleichgewichts, in welcher der expandierte Hüllenabschnitt (25) zurückgeschoben und von einem Ende (32) des Ansatzes (30) zum thermischen Schutz gehalten ist, und einer Ruheposition verformbar ist, in welcher sich die Hülle (20) zum mechanischen Schutz in der Verlängerung des Ansatzes (30) zum thermischen Schutz erstreckt, wobei die Hülle (20) zum mechanischen Schutz von der Position instabilen Gleichgewichts zur Ruheposition durch eine elastische Rückstellung der Hülle (20) zum mechanischen Schutz in die Ruhestellung beweglich ist.

3. Schutzvorrichtung nach Anspruch 1 oder 2, **dadurch gekennzeichnet, dass** der expandierte Hüllenabschnitt (25) durch Zurückschieben auf eine Außenfläche (33) des Ansatzes (30) zum thermischen Schutz gehalten wird.

4. Schutzvorrichtung nach Anspruch 3, **dadurch gekennzeichnet, dass** der Durchmesser (D) des expandierten Hüllenabschnitts (25) größer ist als die Außenabmessungen des Ansatzes (30) zum thermischen Schutz.

5. Schutzvorrichtung nach einem der Ansprüche 1 bis 4, **dadurch gekennzeichnet, dass** die Hülle (20) zum mechanischen Schutz aus einem röhrenförmigen Geflecht aus Monofilamenten besteht.

6. Schutzvorrichtung nach einem der Ansprüche 1 bis 5, **dadurch gekennzeichnet, dass** der Ansatz (30) zum thermischen Schutz eine im Wesentlichen zylindrische Form hat, wobei sich die Hülle (20) zum mechanischen Schutz im Inneren des Ansatzes (30) zum thermischen Schutz erstreckt, wobei die Enden (21, 31) der Hülle (20) zum mechanischen Schutz und des Ansatzes (30) zum thermischen Schutz aneinander befestigt sind.

7. Schutzvorrichtung nach Anspruch 6, **dadurch gekennzeichnet, dass** der Ansatz (30) zum thermischen Schutz ein einem ersten Ende (31) entgegengesetztes zweites Ende (32) aufweist, das an der Hülle (20) zum mechanischen Schutz befestigt ist, wobei das zweite Ende (32) einen Anlagebereich für das Zurückschieben des expandierten Hüllenabschnitts (25) auf das zweite Ende (32) des Ansatzes (30) zum thermischen Schutz bildet.

8. Verwendung einer Schutzvorrichtung nach einem der Ansprüche 1 bis 7, um ein Verbindungselement (11), und insbesondere ein Verbindungselement (11) eines an einem Motor (13) eines Kraftfahrzeugs montierten Sensors (12) abzudecken.

9. Verwendung einer Schutzvorrichtung nach einem der Ansprüche 1 bis 7, um ein Verbindungselement (11) bei der Montage des Verbindungselements (11) an einem Anschlusselement (12) abzudecken, **dadurch gekennzeichnet, dass** sie die folgenden Schritte umfasst:
- Längskompression der Hülle (20) zum mechanischen Schutz, um einen expandierten Hüllenabschnitt (25) um das Verbindungselement (11) herum zu erhalten;
- Zurückschieben des expandierten Hüllenabschnitts (25) durch Anlegen von Druck gegen ein Ende (32) des Ansatzes (30) zum thermischen Schutz;
- Montage des Verbindungselements (11) am Anschlusselement (12); und
- Freigeben des zurückgeschobenen expandierten Hüllenabschnitts (25) durch elastische Rückstellung der Hülle (20) zum mechanischen Schutz in eine Ruhestellung.

## Claims

1. Protection device including a mechanical protection sheath (20) and a thermal protection end-piece (30) mounted at one end (21) of the mechanical protection sheath (20), **characterized in that** said mechanical protection sheath (20) consist of a tubular textile structure that is deformable by compression in the lengthwise direction (X) of the mechanical protection sheath (20), said textile structure having in a lengthwise compression area (24) an expanded sheath portion (25) adapted to cooperate with one end (32) of the thermal protection end-piece (30) by being turned back on itself.

2. Protection device according to claim 1, **characterized in that** said mechanical protection sheath (20) is deformable between a position of unstable equilibrium in which said expanded sheath portion (25) is turned back on itself and retained by one end (32) of the thermal protection end-piece (30) and a rest position in which said mechanical protection sheath (20) is aligned with said thermal protection end-piece (30),the mechanical protection sheath (20) being movable from said position of unstable equilibrium to said rest position by elastic return of said mechanical protection sheath (20) to said rest position.

3. Protection device according to either of claims 1 or 2, **characterized in that** said expanded sheath portion (25) is retained by turning it back on itself over an exterior surface (33) of said thermal protection end-piece (30).

4. Protection device according to claim 3, **characterized in that** the diameter (D) of said expanded sheath portion (25) is greater than the external dimensions of said thermal protection end-piece (30).

5. Protection device according to any of claims 1 to 4, **characterized in that** said mechanical protection sheath (20) consists of a tubular braid of monofilaments.

6. Protection device according to any of claims 1 to 5, **characterized in that** the thermal protection endpiece (30) has a substantially cylindrical shape, the mechanical protection sleeve (20) lying inside said thermal protection end-piece (30), and the ends (21, 31) of said mechanical protection sheath (20) and said thermal protection end-piece (30) being fixed to each other.

7. Protection device according to claim 6, **characterized in that** said thermal protection end-piece (30) has a second end (32) opposite a first end (31) fixed to said mechanical protection sheath (20) and said second end (32) constitutes a bearing area for the turning back on itself of said expanded sheath portion (25) over said second end (32) of said thermal protection end-piece (30).

8. Use of a protection device according to any of claims 1 to 7 to cover a connection element (11) and in particular a connection element (11) of a sensor (12) mounted on an automobile vehicle engine (13).

9. Use of the protection device according to any of claims 1 to 7 to cover a connection element (11) during fitting of said connection element (11) to another connection element (12), **characterized in that** such use comprises the following steps:
- compressing the mechanical protection sheath (20) lengthwise to obtain an expanded sheath portion (25) around said connection element (11);
- turning said expanded sheath portion (25) back on itself by pressing against an end (32) of said thermal protection end-piece (30);
- fitting said connection element (11) to the other connection element (12); and
- releasing said expanded sheath portion (25) turned back on itself for elastic return of said mechanical protection sheath (20) to a rest position.
